# EUROPÄISCHE PATENTSCHRIFT

(11) **EP 2 372 474 B1**
(45) Veröffentlichungstag und Bekanntmachung des Hinweises auf die Patenterteilung: **30.10.2013**
(21) Anmeldenummer: 11151639.9
(22) Anmeldetag: 21.01.2011
(51) Int. Cl.: G05B 15/02

(54) **Steuergerät für ein Gebäudeinstallationssystem sowie Verfahren zum Betreiben eines solchen Steuergeräts**
Control device for a building installation system and method for operating such a control device
Appareil de commande pour un système d'installation de bâtiment et procédé de fonctionnement d'un tel appareil de commande

(30) Priorität: 19.03.2010 DE 102010016033
(43) Veröffentlichungstag der Anmeldung: 05.10.2011
(73) Patentinhaber: Elka-Elektronik GmbH, D-58509 Lüdenscheid (DE)
(72) Erfinder: Krolow, Ralf, Dipl.-Ing., 58513 Lüdenscheid (DE); Kaiser, Thomas, Dipl.-Ing., 58507 Lüdenscheid (DE); Lepke, Thorsten, Dipl.-Ing., 58809 Neuenrade (DE)
(74) Vertreter: Haverkamp, Jens

(56) Entgegenhaltungen:
- EP-A1- 2 056 530
- WO-A1-2011/071471
- US-A1- 2006 143 487
- US-A1- 2009 147 696
- US-B1- 6 791 467
- WAN-KI PARK ET AL: "Energy Efficient Home Gateway Based on User Service Traffic in Always-On Home Network Environment", ADVANCES IN ELECTRONICS AND MICRO-ELECTRONICS, 2008. ENICS '08. INTERNATIONAL CONFERENCE ON, IEEE, PISCATAWAY, NJ, USA, 29. September 2008 (2008-09-29), Seiten 121-125, XP031345622, ISBN: 978-0-7695-3370-4

## Beschreibung

Die Erfindung betrifft ein Steuergerät für ein über einen Bus ansteuerbare Aktoren aufweisendes Gebäudeinstallationssystem, welcher Bus eine Schnittstelle zum Anschließen des Steuergerätes an einen solchen Bus und einen Monitor zum Abbilden des Gebäudeinstallationssystems, von Teilen desselben und/oder von Zuständen von an den Bus angeschlossenen Aktoren und/oder Sensoren umfasst. Ferner betrifft die Erfindung ein Verfahren zum Betreiben eines Steuergerätes eines Gebäudeinstallationssystems, dessen Aktoren über einen Bus ansteuerbar sind, umfassend eine Schnittstelle zum Anschließen des Steuergerätes an einen solchen Bus und einen Monitor zum Abbilden des Gebäudeinstallationssystems, von Teilen desselben und/oder von Zuständen von an den Bus angeschlossenen Aktoren und/oder Sensoren.

Bei modernen Gebäudeinstallationssystemen sind Aktoren auch unterschiedlicher Gewerke über einen Datenbus miteinander vernetzt. Bei einer solchen Ausgestaltung stellt jeder Aktor einen Busteilnehmer dar. Zum Steuern des Bus bzw. Bussystems dient ein Steuergerät, welches ebenfalls an den Datenbus angeschlossen ist. Über ein solches Steuergerät können die einzelnen, als Busteilnehmer an den Bus angeschlossenen Aktoren angesteuert werden. Über ein solches Steuergerät können auch an den Bus angeschlossene Sensoren ausgelesen werden, so dass auf diese Weise Regelkreise programmiert werden können. Derartige Steuergeräte sind typischerweise als Bedienkonsolen ausgelegt und umfassen einen Monitor zum Anzeigen des Gebäudeinstallationssystems, von Teilen desselben und/oder von aktuellen Zuständen einzelner oder mehrerer an den Bus angeschlossener Aktoren oder auch der aktuellen Daten von Sensoren. Eine solche Bedienkonsole (Paneel) kann als Touchscreen ausgeführt sein. Zum Betrieb eines solchen Steuergerätes wird für die Steuer- und/oder Regelaufgaben des Bussystems und den Betrieb der Bedienkonsole mit ihrem Monitor eine Prozessoreinheit benötigt. Der Prozessoreinheit zugeordnet ist eine Schnittstelle zum Anschließen des Steuergerätes an den Bus.

Aus DE 197 06 957 A1 ist ein elektronisches Gerät der Gebäudeinstallationstechnik bekannt, das einen Applikationsprozessor enthält und eine Standardschnittstelle aufweist. Um ein derartiges Gerät nachträglich mit einer Applikationssoftware versehen zu können, wird die ohnehin standardmäßig vorhandene Schnittstelle für den Anschluss eines Programmieradapters benutzt. Es können somit nacheinander ein Programmieradapter oder ein Standardmodul bzw. eine Busankopplung mit der Schnittstelle des elektronischen Gerätes verbunden werden.

DE 600 04 990 T2 offenbart ein drahtloses Steuerungsnetzwerk, bei dem eine drahtlose, zweiseitig gerichtete Hochfrequenzkommunikation zwischen Haupteinheiten und abgesetzten Einheiten verwendet wird. Um den Stromverbrauch der abgesetzten Einheiten zu verringern, werden vorbestimmte Kommunikationszeiten über den Sender der Haupteinheit für jede der abgesetzten Einheiten bereitgestellt. Die Sender/Empfänger der abgesetzten Einheiten können einen Zustand mit sehr niedrigem Stromverbrauch aufweisen, in dem der Sender/Empfänger weder sendet noch empfängt.

US 2009/0147696 A1 beschreibt ein Energie berücksichtigendes Gateway basierend auf einem Netzwerkprotokoll und einem entsprechenden Kontrollverfahren. Das aus diesem Dokument bekannt gewordene Gateway besteht aus mehreren unterschiedlichen Funktionsmodulen, wobei diese Netzwerkmodule für die Bereitstellung der physischen Schnittstelle zu einem Hausnetzwerk und eine externen Netzwerk beinhalten. Vorgesehen ist ferner ein Prozessormodul, mit dem die funktionalen Operationen des Gateways ausgeführt werden, ein Speichermodul als Speicher für das Prozessormodul sowie weitere Module, zu denen unter anderem auch ein Stromversorgungsmodul gehört. Das Stromversorgungsmodul ist für die Stromversorgung des Gesamtsystems zuständig.

Mitunter weist ein Steuergerät, wie eingangs beschrieben, eine weitaus höhere Funktionalität auf als lediglich die ihm für den Betrieb des Busses zugeordneten Steuer- und/oder Regelaufgaben. Dieses umfasst, dass derartige Steuergeräte Bus-unabhängige Anwenderprogramme ausführen können und somit ein solches Steuergerät die Funktionalität eines PC aufweisen kann.

Auch wenn anwenderseitig der Wunsch nach solchen multifunktionalen Gebäudeinstallationssteuergeräten besteht, wird als nachteilig der mit zunehmender Funktionalität und komplexeren Monitoren einhergehende steigende Stromverbrauch angesehen.

Vor dem vorstehend aufgezeigten Hintergrund liegt der Erfindung daher die Aufgabe zugrunde, ein eingangs genanntes Steuergerät sowie ein eingangs genanntes Verfahren dergestalt weiterzubilden, dass selbst bei Vorsehen einer hohen Funktionalität innerhalb des Steuergerätes der Stromverbrauch reduziert ist.

Die vorrichtungsbezogene Aufgabe wird erfindungsgemäß durch ein eingangs genanntes, gattungsgemäßes Steuergerät gelöst, bei dem das Steuergerät über wenigstens eine erste Prozessoreinheit zum Betreiben des Monitors und über zumindest eine zweite Prozessoreinheit zum Durchführen der Bus-gebundenen Steuer- und/oder Regelaufgaben des Steuergerätes unabhängig von der ersten Prozessoreinheit verfügt, welcher zweiten Prozessoreinheit die Busschnittstelle des Steuergerätes zugeordnet ist und welche zweite Prozessoreinheit über eine Kommunikationsverbindung mit der ersten Prozessoreinheit verbunden ist, damit über diese von zum Anzeigen des Gebäudeinstallationssystems, von Teilen davon und/oder von Zuständen von an dem Bus angeschlossenen Aktoren und/oder Sensoren auf dem Monitor notwendige Daten von der zweiten Prozessoreinheit an die erste Prozessoreinheit übertragbar sind, in welche Kommunikationsverbindung eine Weckfunktion eingeschaltet ist, über die die erste Prozessoreinheit aus einem Stand-by- oder Sleep-Modus in ihren Betriebsmodus geschaltet werden kann.

Die verfahrensbezogene Aufgabe wird erfindungsgemäß durch ein eingangs genanntes, gattungsgemäßes Verfahren gelöst, bei dem in dem Steuergerät wenigstens eine erste Prozessoreinheit bedarfsabhängig und zumindest eine zweite Prozessoreinheit, alleinverantwortlich für die Steuer- und/oder Regelaufgaben des Busses und/oder der daran angeschlossenen Installationen, betrieben werden, wobei die erste Prozessoreinheit zum Anzeigen des Gebäudeinstallationssystems, von Teilen davon und/oder von Zuständen von an den Bus angeschlossenen Aktoren und/oder Sensoren auf dem Monitor von der zweiten Prozessoreinheit angesteuert wird.

Bei diesem Steuergerät - gleiches gilt für das Verfahren zum Betreiben desselben - dient eine erste Prozessoreinheit zum Ansteuern des Monitors und, sollte das Steuergerät über weitere Funktionalitäten verfügen, zum Bereitstellen der notwendigen Rechen- bzw. Prozessorleistung zum Ausführen derselben. Neben dieser zumindest einen ersten Prozessoreinheit verfügt das Steuergerät über eine zweite Prozessoreinheit. Diese zweite Prozessoreinheit ist für die Busfunktionalität des Steuergerätes zuständig und arbeitet hinsichtlich der ihr zugeordneten Steuer- und/oder Regelaufgaben unabhängig von der ersten Prozessoreinheit. Diesem Konzept liegt die Erkenntnis zugrunde, dass für den Steuer- und/oder Regelbetrieb des Bussystems, also: für die Busfunktionalität des Steuergerätes eine relativ geringere Prozessorleistung genügt, verglichen mit der zum Ansteuern eines Monitors benötigten. Dieses gilt erst recht, wenn die erste Prozessoreinheit zum Ausführen weiterer Funktionalitäten vorgesehen ist. Ferner wird bei diesem Konzept berücksichtigt, dass der Betrieb des Monitors zum Abbilden von Busfunktionalitäten nur sehr selten benötigt wird, wohingegen die Busfunktionalität des Steuergerätes für die ihm zugedachten Steuer- und/oder Regelaufgaben grundsätzlich ununterbrochen in Betrieb sein muss. Die erste Prozessoreinheit kann somit bei Nichtbedarf in einen Stand-by- oder einen Sleep-Modus heruntergefahren werden. Mit anderen Worten: Die erste Prozessoreinheit wird nur bedarfsweise betrieben. Da die Busfunktionalität über die zweite, typischerweise eine nicht unerheblich geringere Prozessorleistung aufweisende Prozessoreinheit erhalten bleibt, ist der Gesamtstromverbrauch eines solchen Steuergerätes deutlich geringer als bei einem herkömmlichen Steuergerät. Das bedarfsweise Betreiben der ersten Prozessoreinheit schließt einen entsprechenden Betrieb des Monitors ein, der, wenn sich die erste Prozessoreinheit in einem Stand-by- oder Sleep-Modus befindet, ausgeschaltet sein kann.

Ein solches Steuergerät verfügt somit über zwei grundsätzlich voneinander unabhängig betreibbare Prozessoreinheiten, denen unterschiedliche Funktionalitäten zugeordnet sind. Auch ist es bei einem solchen Konzept ohne weiteres möglich, an eine erste für die erweiterte Funktionalität zuständige Prozessoreinheit mehrere zweite Prozessoreinheiten - Busmodule - anzuschließen, was es ermöglicht, mit ein und demselben Steuergerät Daten unterschiedlicher Busse anzuzeigen bzw. zu visualisieren und/oder die unterschiedlichen Busmodulen mit ein und derselben Eingabestation zu programmieren.

Der ersten Prozessoreinheit ist vorzugsweise ein Programmiermodul zugeordnet, mit dem das zumindest eine Busmodul programmiert werden kann. Die zwischen dem Busmodul (zweite Prozessoreinheit) und der ersten Prozessoreinheit vorhandene Kommunikationsverbindung, die typischerweise als serielle Kommunikation ausgeführt ist, ist sodann bidirektional ausgelegt. Bei einer bidirektionalen Auslegung der Kommunikationsverbindung zwischen der zweiten Prozessoreinheit und der ersten Prozessoreinheit kann diese zudem genutzt werden, damit sich beide Prozessoreinheiten gegenseitig hinsichtlich ihrer Funktionstüchtigkeit oder von Teilen derselben kontrollieren bzw. überwachen können.

Die Funktionalität der ersten Prozessoreinheit kann durch Vorsehen zusätzlicher Schnittstellen erweitert werden. Dabei gilt auch für diese Schnittstellen, dass diese nur dann aktiv sind, wenn die erste Prozessoreinheit sich in ihrem Betriebsmodus befindet. Daher tragen zusätzliche Schnittstellen nicht oder zumindest nicht nennenswert zu einem höheren Stromverbrauch bei. Diese weiteren Schnittstellen können mit einem Wake-Up-Interrupt ausgestattet sein, sodass die erste Prozessoreinheit auch über diese Schnittstellen geweckt werden kann.

Vorzugsweise ist die als Busmodul konzipierte zweite Prozessoreinheit mit den übrigen Komponenten des Steuergerätes über Steckkontakte elektrisch verbunden. Somit ist das Busmodul von den übrigen Komponenten des Steuergerätes lösbar. Dieses ermöglicht eine anwenderspezifische Konfigurierung des Steuergerätes, da typischerweise zum Ansteuern unterschiedlicher Bussysteme unterschiedlich ausgelegte Busmodule verwendet werden.

Die Aufteilung der Funktionalitäten des Steuergerätes in eine Bussystembezogene Funktionalität, gesteuert von der zweiten Prozessoreinheit, und in die Bus-unabhängigen Funktionalitäten, gesteuert von der ersten Prozessoreinheit, erhöht zudem die Betriebssicherheit des Steuergerätes. Schließlich ist ein Konflikt zwischen einem ablaufenden Anwenderprogramm und der Busfunktionalität durch den Einsatz jeweils einer eigenen Prozessoreinheit vermieden.

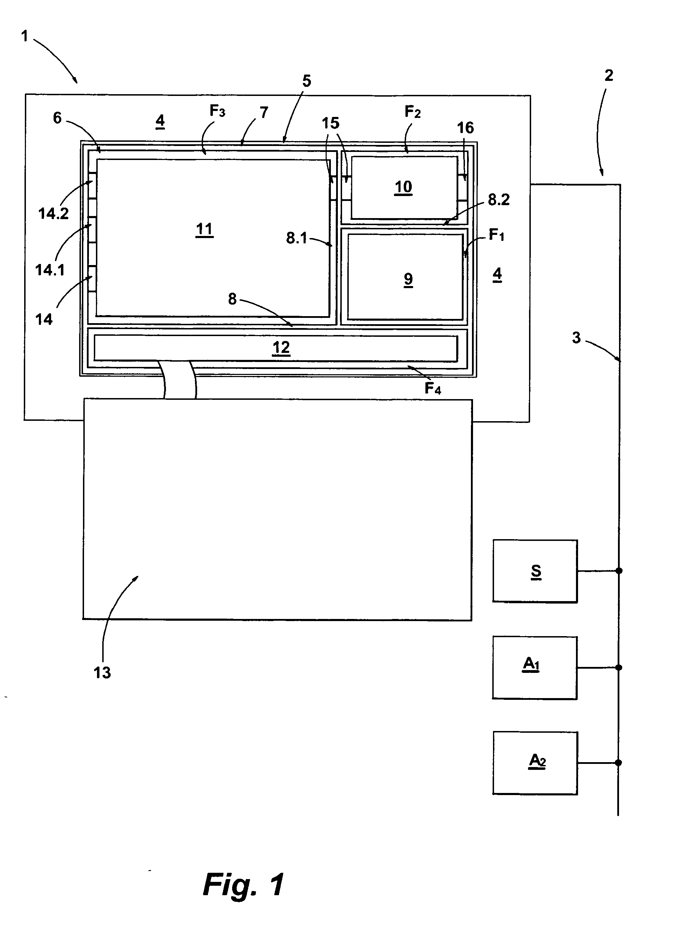

Weitere Vorteile und Ausgestaltungen der Erfindung ergeben sich aus der Beschreibung eines Ausführungsbeispiels unter Bezugnahme auf die beiliegende **Figur 1**. Figur 1 zeigt in einer schematisierten Darstellung ein Steuergerät 1 eines mit dem Bezugszeichen 2 gekennzeichneten Gebäudeinstallationssystems. Das Gebäudeinstallationssystem 2 umfasst einen Datenbus 3, an den mehrere Aktoren A₁, A₂ als Busteilnehmer angeschlossen sind. Neben Aktoren A₁, A₂ ist beispielhaft an den Datenbus 3 ebenfalls ein Sensor S als Busteilnehmer angeschlossen. Zur Steuerung der an den Datenbus 3 angeschlossenen Aktoren A₁, A₂ und Sensoren dient das Steuergerät 1.

Das Steuergerät 1 ist als Wandmodul konzipiert und umfasst einen in einen Einbaurahmen 4 eingesetzten Gehäuseeinsatz 5 aus Kunststoff. Der Gehäuseeinsatz 5 verfügt über eine Bodenplatte 6, eine umlaufende Wand 7 sowie über mehrere Querwände 8, 8.1, 8.2. Durch die Wände 7, 8, 8.1, 8.2 ist ein Gefache gebildet, wobei jedes Fach zur Aufnahme eines Teilmoduls des Steuergerätes 1 dient. In einem ersten Fach F₁ ist ein Netzteilmodul 9 angeordnet. Getrennt durch die Querwand 8.2 ist in dem benachbarten Fach F₂ ein Busmodul 10 untergebracht. Von dem Netzteilmodul 9 durch die Querwand 8.1 getrennt befindet sich in dem Fach F₃ ein Hauptmodul 11 und durch die Querwand 8 abgetrennt in dem Fach F₄ eine Grafikkarte 12. Angeschlossen an die Grafikkarte 12 ist ein als Touchscreen konzipierter Monitor 13, der in Figur 1 in seiner von dem Gehäuseeinsatz 5 aufgeklappten Stellung gezeigt ist, um einen Einblick in den Gehäuseeinsatz 5 freizugeben. In Benutzungsstellung verschließt der Monitor 13 den Gehäuseeinsatz 5 und die darin untergebrachten Module bzw. Komponenten.

Die vorbeschriebenen Module bzw. Komponenten sind jeweils unabhängig voneinander auf einer eigenen Leiterplatte aufgebaut. Dieses gestattet nicht nur, dass die unterschiedlichen Leiterplatten den jeweiligen Anforderungen und Ausgestaltungen entsprechend individuell unabhängig voneinander hergestellt werden können, sondern gestattet zudem eine kompakte Anordnung der Module bzw. Komponenten zueinander. Um Kriechströme zwischen den einzelnen Modulen bzw. Komponenten zu verhindern, dienen die Querwände 8, 8.1, 8.2. Hinsichtlich der individuellen Herstellung kann somit das Hauptmodul 11 mit seiner Prozessoreinheit, die im Rahmen dieser Ausführungen als erste Prozessoreinheit angesprochen ist, welches typischerweise eine mehrlagige Leiterplatte aufweist, mit anderen Techniken hergestellt werden als beispielsweise das anderen Anforderungen genügende Netzteil 9. Gleiches gilt für das Busmodul 10. Zudem ermöglicht diese Modularität die Bereitstellung von anwenderspezifisch konfigurierten Steuergeräten, die in Abhängigkeit von der jeweils gewünschten Funktionalität mit unterschiedlichen Modulen ausgerüstet werden können. Das Hauptmodul 11 verfügt über die im Rahmen dieser Ausführung als erste Prozessoreinheit angesprochene Prozessoreinheit, typischer Weise als Mikrocontroller ausgeführt. Das Hauptmodul 11 dient zum Ansteuern des Monitors 13 sowie zum Ablaufenlassen von individuellen Anwenderprogrammen. Somit ist das Hauptmodul 11 mit Ausnahme der Ansteuerung des Monitors 13 verantwortlich für die Bus-unabhängige Funktionalität des Steuergerätes 1. Dem Hauptmodul 11 zugeordnet sind externe Schnittstellen 14, 14.1, über die Zusatzgeräte, beispielsweise Kartenlesegeräte, externe PCs oder dergleichen angeschlossen werden können. Eine weitere Schnittstelle 14.2 dient zum Anschluss des Hauptmoduls 11 an eine externe Datenübertragung, um das Hauptmodul 11 und damit das Steuergerät 1 beispielsweise an das Internet anschließen zu können.

Die in dem Gehäuseeinsatz 5 eingesetzten Module 10, 11 und 12 sind mittels Steckverbindern (nicht dargestellt) an entsprechende, in dem Gehäuseeinsatz 5 angeordnete Leiter anschließbar, welche Leiter die notwendigen Verbindungen der einzelnen Module untereinander darstellen.

Das Hauptmodul 11 ist über eine Kommunikationsverbindung 15 an das Busmodul 10 angeschlossen. Die Kommunikationsverbindung 15 ist bei dem dargestellten Ausführungsbeispiel seriell konzipiert. Das Busmodul 10 verfügt über eine zweite Prozessoreinheit und ist ausgelegt, um eigenständig und unabhängig von dem Hauptmodul 11 sämtliche Bus-bezogenen Steuer- und/oder Regelaufgaben durchführen zu können. Dieses umfasst das Betreiben einer Busschnittstelle 16, mit der das Steuergerät 1 an den Datenbus 3 angeschlossen ist. Die Prozessorleistung des Prozessors des Busmoduls 10 ist verglichen mit der Prozessorleistung des zumindest einen Prozessors der Prozessoreinheit des Hauptmodules 11 gering. Das Gebäudeinstallationssystem 2 kann, wie bereits ausgeführt, unabhängig von dem Hauptmodul 11 alleinig von dem Busmodul 10 als Busteilnehmer gesteuert werden. Nur für den Fall, dass eine Anzeige und/oder eine Programmierung gewünscht wird, wird das Hauptmodul 11 in Betrieb genommen.

Das Netzteilmodul 9 versorgt das Busmodul 10 und das Hauptmodul 11, sowie die Grafikkarte 12 und den Monitor 13 mit dem notwendigen Betriebsstrom.

Befindet sich das Steuergerät 1 in Betrieb, ist gleichermaßen das Busmodul 10 in seinem Betriebsmodus, um die notwendigen Steuer- und/oder Regelaufgaben des Gebäudeinstallationssystems 2 ausführen zu können. Die Stromaufnahme des Steuergerätes 1 ist dann somit allein bzw. so gut wie allein durch den Stromverbrauch des Busmoduls 10 bestimmt. Das Busmodul 10 kann in Abhängigkeit von den zu überwachenden Steuer-und/oder Regelaufgaben auch in einen Stand-by-/oder Sleep-Modus geschaltet werden. Gleichfalls ist ein getakteter Betrieb des Busmoduls möglich, sodass auch bezüglich des Busmoduls 10 grundsätzlich Möglichkeiten bestehen, den Stromverbrauch noch weiter zu reduzieren, sollte dieses notwendig oder gewünscht sein.

Das Hauptmodul 11 befindet sich dagegen je nach Ausgestaltung des Systems und der jeweiligen vorangegangenen Anwendung grundsätzlich in einem Stand-by- oder Sleep-Modus. Befindet sich das Hauptmodul 11 im Sleep-Modus, ist dessen Stromverbrauch auf ein Minimum reduziert. Nur für den Fall, dass in Bezug auf den Betrieb des Gebäudeinstallationssystems 2 eine Anzeige oder eine Programmierung gewünscht wird, wird das Hauptmodul 11 geweckt. Dieses erfolgt entweder durch entsprechende Ansteuerung des Hauptmoduls 11 über einen Wake-Up-Interrupt von dem als Touchscreen ausgebildeten Monitor 13 oder, für den Fall, dass Gebäudeinstallationssystem-seitig eine Anzeige generiert werden soll, ausgehend von dem Busmodul 10. Zu diesem Zweck ist in die Kommunikationsverbindung 15 eine Weck-Funktion eingebaut, über die das Hauptmodul 11 von dem Busmodul 10 geweckt werden kann. Im Anschluss an ein solches Wecksignal wird das Hauptmodul 11 in seinen Betriebsmodus hochgefahren, so dass die gewünschte Anzeige und/oder Programmierung vorgenommen werden kann. Für den Betrieb des Gebäudeinstallationssystems 2 wird die leistungsfähigere Prozessoreinheit des Hauptmoduls 11 mit dem daran gekoppelten höheren Stromverbrauch nur dann in Betrieb genommen, wenn eine Anzeige und/oder eine Programmierung tatsächlich gewünscht sind. Dieses ist verglichen mit dem typischerweise konstanten Betrieb des Busmoduls 10 jedoch nur höchst selten.

Auch wenn mit dem Hauptmodul 11 Anwenderprogramme laufengelassen werden können, wie beispielsweise Internet oder Email-Funktionalitäten, Textverarbeitungsprogramme, Kalkulationsprogramme, Grafikprogramme oder dergleichen, dürfte ein Betrieb des Hauptmoduls 11 auch mit diesen Funktionalitäten verglichen mit der ständig laufenden Funktionalität des Busmoduls 10 in Bezug auf die Zeitdauer des jeweiligen Betriebs gering ausfallen. Dieses macht deutlich, dass bei dem Steuergerät 1 der Stromverbrauch sehr gering gehalten ist und die benötigte Rechenkapazität nur bei Bedarf mit dem damit verbundenen höheren Stromverbrauch bereitgestellt wird.

Aus seinem Betriebsmodus kann das Hauptmodul 11 entweder manuell durch Eingabe eines entsprechenden Befehles oder bei Untätigkeit nach einer vordefinierten Zeitspanne in seinen Stand-by- oder Sleep-Modus wieder herunterfahren. Dabei kann vorgesehen sein, dass das Hauptmodul 11 nach einer ersten Zeitspanne zunächst in einen Stand-by-Modus herunterfährt, in dem gewisse Funktionalitäten noch aktiv sind, um bei Bedarf rascher wieder in den Betriebmodus gelangen zu können, und in den Sleep-Modus erst dann gefahren wird, wenn eine zweite Zeitspanne ohne Nutzung verstrichen ist.

Infolge der Bidirektionalität der Kommunikationsverbindung 15 können sich die beiden Module 10, 11 gegenseitig hinsichtlich ihrer Funktionstüchtigkeit oder von Teilen derselben kontrollieren. Bei Feststellen eines Fehlers kann ein Neustart generiert werden, um einen längeren Systemausfall zu verhindern.

Die Unabhängigkeit von Busmodul 10 und Hauptmodul 11 gewährleistet, dass mit dem Hauptmodul 11 beliebig gearbeitet werden kann, ohne dass hierdurch die Funktionalität des Busmoduls 10 beeinträchtigt wäre. Insbesondere kann eine Bus-bezogene Programmierung am Hauptmodul 11 vorgenommen werden, ohne eine ablaufende Funktionalität des Busmoduls 10 stoppen oder unterbrechen zu müssen. Eine solche Umprogrammierung kann eine Umprogrammierung für den Betrieb des Gebäudeinstallationssystems 2 beinhalten. Eine Übertragung der Neu- oder Umprogrammierung von dem Hauptmodul 11 auf das Busmodul 10 erfolgt dann, wenn auf dem Datenbus 3 keine Kommunikation stattfindet.

Die Erfindung ist anhand eines Ausführungsbeispiels beschrieben worden. Ohne den Umfang der Ansprüche zu verlassen, ergeben sich für einen Fachmann zahlreiche weitere Möglichkeiten, die Erfindung umzusetzen, ohne dass diese im Einzelnen im Rahmen dieser Ausführungen näher dargelegt werden müssten.

### Bezugszeichenliste

- 1: Steuergerät
- 2: Gebäudeinstallationssystem
- 3: Datenbus
- 4: Einbaurahmen
- 5: Gehäuseeinsatz
- 6: Bodenplatte
- 7: Wand, umlaufend
- 8, 8.1, 8.2: Querwand
- 9: Netzteilmodul
- 10: Busmodul
- 11: Hauptmodul
- 12: Grafikkarte
- 13: Monitor
- 14, 14.1, 14.2: Schnittstelle
- 15: Kommunikationsverbindung
- 16: Busschnittstelle

- A₁, A₂: Aktor
- F₁ - F₄: Fach
- S: Sensor

## Patentansprüche

1. Steuergerät für ein über einen Bus (3) ansteuerbare Aktoren (A₁, A₂) aufweisendes Gebäudeinstallationssystem (2), welches Steuergerät (1) eine Schnittstelle (16) zum Anschließen des Steuergerätes (1) an einen solchen Bus (3) und einen Monitor (13) zum Abbilden des Gebäudeinstallationssystems (2), von Teilen desselben und/oder von Zuständen von an den Bus (3) angeschlossenen Aktoren (A₁, A₂) und/oder Sensoren (S) umfasst, **dadurch gekennzeichnet, dass** das Steuergerät (1) über wenigstens eine erste Prozessoreinheit zum Betreiben des Monitors (13) und über zumindest eine zweite Prozessoreinheit zum Durchführen der Bus-gebundenen Steuer- und/oder Regelaufgaben des Steuergerätes (1) unabhängig von der ersten Prozessoreinheit verfügt, welcher zweiten Prozessoreinheit die Busschnittstelle (16) des Steuergerätes (1) zugeordnet ist und welche zweite Prozessoreinheit über eine Kommunikationsverbindung (15) mit der ersten Prozessoreinheit verbunden ist, damit über diese von zum Anzeigen des Gebäudeinstallationssystems (2), von Teilen davon und/oder von Zuständen von an dem Bus (3) angeschlossenen Aktoren (A₁, A₂) und/oder Sensoren (S) auf dem Monitor (13) notwendige Daten von der zweiten Prozessoreinheit an die erste Prozessoreinheit übertragbar sind, in welche Kommunikationsverbindung (15) eine Weckfunktion eingeschaltet ist, über die die erste Prozessoreinheit aus einem Stand-by- oder Sleep-Modus in ihren Betriebsmodus geschaltet werden kann.

2. Steuergerät nach Anspruch 1, **dadurch gekennzeichnet, dass** die erste Prozessoreinheit ein Programmiermodul zum Programmieren der zweiten Prozessoreinheit umfasst und die Kommunikationsverbindung (15) zwischen der ersten Prozessoreinheit und der zweiten Prozessoreinheit zu diesem Zweck bidirektional eingerichtet ist.

3. Steuergerät nach Anspruch 1 oder 2, **dadurch gekennzeichnet, dass** der ersten Prozessoreinheit ein oder mehrere Schnittstellen (14, 14.1, 14.2) zum Anschließen von Zusatzgeräten, wie etwa einem Kartenlesegerät, einem externen Computer, eine externe Kommunikationseinrichtung oder dergleichen zugeordnet sind.

4. Steuergerät nach einem der Ansprüche 1 bis 3, **dadurch gekennzeichnet, dass** die erste Prozessoreinheit zum Ausführen von Busunabhängigen Anwenderprogrammen ausgelegt ist.

5. Steuergerät nach einem der Ansprüche 1 bis 4, **dadurch gekennzeichnet, dass** die Prozessoreinheiten an ein gemeinsames Netzteil (9) angeschlossen sind.

6. Steuergerät nach einem der Ansprüche 1 bis 5, **dadurch gekennzeichnet, dass** die zweite Prozessoreinheit als von den übrigen Komponenten des Steuergerätes durch Steckkontakte lösbares Busmodul (10) ausgeführt ist.

7. Steuergerät nach Anspruch 5 und 6, **dadurch gekennzeichnet, dass** das Netzteil als von den übrigen Komponenten des Steuergeräts durch Steckkontakte lösbares Netzteilmodul (9) ausgeführt ist.

8. Steuergerät nach Anspruch 5 und 6 oder 7, **dadurch gekennzeichnet, dass** die erste Prozessoreinheit, das Busmodul (10) und das Netzteilmodul (9) jeweils unterschiedliche Leiterplatten aufweisen und diese Module innerhalb eines Gehäuses (5) des Steuergerätes (1) jeweils in einem Gehäusefach (F₁ - F₄) angeordnet sind, welche Gehäusefächer (F₁ - F₄) durch Wände (8, 8.1, 8.2) voneinander getrennt sind.

9. Verfahren zum Betreiben eines Steuergerätes (1) eines Gebäudeinstallationssystems (2), dessen Aktoren (A₁, A₂) über einen Bus (3) ansteuerbar sind, umfassend eine Schnittstelle (16) zum Anschließen des Steuergerätes (1) an einen solchen Bus (3) und einen Monitor (13) zum Abbilden des Gebäudeinstallationssystems, von Teilen desselben und/oder von Zuständen von an den Bus angeschlossenen Aktoren (A₁, A₂) und/oder Sensoren (S), **dadurch gekennzeichnet, dass** in dem Steuergerät (1) wenigstens eine erste Prozessoreinheit bedarfsabhängig und zumindest eine zweite Prozessoreinheit, alleinverantwortlich für die Steuer- und/oder Regelaufgaben des Busses (3) und/oder der daran angeschlossenen Installationen, betrieben werden, wobei die erste Prozessoreinheit zum Anzeigen des Gebäudeinstallationssystems, von Teilen davon und/oder von Zuständen von an den Bus angeschlossenen Aktoren (A₁, A₂), und/oder Sensoren (S) auf dem Monitor (13) von der zweiten Prozessoreinheit angesteuert wird.

10. Verfahren nach Anspruch 9, **dadurch gekennzeichnet, dass** die erste Prozessoreinheit bei Feststellen eines Nichtbedarfes in einen Stand-by- oder Sleep-Modus heruntergefahren wird.

11. Verfahren nach Anspruch 10, **dadurch gekennzeichnet, dass** das Ansteuern der ersten Prozessoreinheit durch die zweite Prozessoreinheit ein Wecken und Hochfahren derselben aus dem Stand-by- oder Sleep-Modus umfasst.

12. Verfahren nach einem der Ansprüche 9 bis 11, **dadurch gekennzeichnet, dass** die beiden Prozessoreinheiten sich gegenseitig hinsichtlich ihrer Funktionstüchtigkeit insgesamt oder in Teilen davon kontrollieren.

## Claims

1. A control device for a building installation system (2) exhibiting actuators (A₁, A ₂) triggerable via a bus (3), which control device (1) comprises an interface (16) for connecting the control device (1) to such a bus (3) and a monitor (13) for the mapping of the building installation system (2), of parts thereof and/or of states of actuators (A₁ , A₂) and/or sensors (S) connected to the bus (3), wherein the control device (1) comprises at least one first processor unit for the operating of the monitor (13) and at least one second processor unit for executing the bus-bound control and/or regulation tasks of the control device (1) independently of the first processor unit, with which second processor unit the bus interface (16) of the control device (1) is associated and which second processor unit is connected by a communication link (15) to the first processor unit such that data which are necessary for the displaying on the monitor (13) of the building installation system (2), of parts thereof and/or of states of actuators (A ₁, A ₂) and/or sensors (S) connected to the bus (3) can be transferred over it from the second processor unit to the first processor unit, into which communication link (15) is switched a wake-up function by which the first processor unit can be switched out of a standby or sleep mode into its operating mode.

2. The control device of claim 1 **wherein** the first processor unit comprises a programming module for the programming of the second processor unit and the communication link (15) between the first processor unit and the second processor unit is configured bidirectionally for this purpose.

3. The control device of claim 1 or 2 **wherein** one or more interfaces (14, 14.1, 14.2) for the connecting of additional devices such as for example a card reader, an external computer, an external communication device or such like are associated with the first processor unit.

4. The control device of any one of claims 1 to 3 **wherein** the first processor unit is designed for executing bus-independent user programmes.

5. The control device of any one of claims 1 to 4 **wherein** the processor units are connected to a common power supply unit (9).

6. The control device of any one of claims 1 to 5 **wherein** the second processor unit is executed as a bus module (10) which can be detached from the other components of the control device by plug-in contacts.

7. The control device of claim 5 and 6 **wherein** the power supply unit is executed as a power supply unit module (9) which can be detached from the other components of the control device by plug-in contacts.

8. The control device of claim 5 and 6 or 7 **wherein** the first processor unit, the bus module (10) and the power supply unit module (9) each exhibit different printed circuit boards and these modules are arranged within a housing (5) of the control device (1) each in a housing compartment (F₁ - F ₄), said housing compartments (F₁ - F₄) being separated from one another by walls (8, 8.1, 8.2).

9. A method for operating a control device (1) of a building installation system (2), whose actuators (A₁, A₂) can be triggered by a bus (3), comprising an interface (16) for the connection of the control device (1) to such a bus (3) and a monitor (13) for the mapping of the building installation system, of parts thereof and/or of states of actuators (A ₁, A ₂) and/or sensors (S) connected to the bus, **wherein** are operated in the control device (1) at least one first processor unit according to demand and at least one second processor unit, solely responsible for the control and/or regulation tasks of the bus (3) and/or of the installations connected to it, with the first processor unit being triggered by the second processor unit for the displaying on the monitor (13) of the building installation systems, of parts thereof and/or of states of actuators (A₁, A ₂) and/or sensors (S) connected to the bus.

10. The method of claim 9 **wherein** the first processor unit is shut down into a standby or sleep mode if no demand is detected.

11. The method of claim 10 **wherein** the triggering of the first processor unit by the second processor unit comprises a waking up and running up of the same out of the standby or sleep mode.

12. The method of any one of claims 9 to 11 **wherein** the two processor units monitor one another mutually in regard to their serviceability overall or in parts thereof.

## Revendications

1. Appareil de commande pour un système d'installation de bâtiment (2) présentant des acteurs (A₁, A₂) excitables par un bus (3), lequel appareil de commande (1) comporte une interface (16) destinée à connecter l'appareil de commande (1) à un tel bus (3) et un moniteur (13) destiné à représenter le système d'installation de bâtiment (2), des parties de ce dernier et/ou des états des acteurs (A₁, A₂) raccordés au bus (3) et/ou des capteurs (S), **caractérisé en ce que** l'appareil de commande (1) dispose d'au moins une première unité centrale afin d'exploiter le moniteur (13) et d'au moins une deuxième unité centrale afin d'exécuter indépendamment de la première unité centrale les tâches de commande et/ou de régulation de l'appareil de commande (1) associées au bus et à laquelle deuxième unité centrale est affectée l'interface (16) de l'appareil de commande (1) et laquelle deuxième unité centrale est connectée par une liaison de communication (15) avec la première unité centrale, afin que l'on puisse, grâce à celle-ci, transmettre de la seconde unité centrale vers la première unité centrale les données nécessaires pour afficher sur le moniteur (13) le système d'installation de bâtiment (2), des parties de ce dernier et/ou des états des acteurs (A₁, A₂) raccordés au bus (3) et/ou des capteurs (S), une fonction de réveil étant intégrée dans ladite liaison de communication (15) grâce à laquelle la première unité centrale peut être sortie d'un mode veille ou sommeil pour être mise en mode de fonctionnement.

2. Appareil de commande selon la revendication 1, **caractérisé en ce que** la première unité centrale comprend un module de programmation destiné à programmer la seconde unité centrale et que la liaison de communication (15) entre la première unité centrale et la deuxième unité centrale est, à cet effet, bidirectionnelle.

3. Appareil de commande selon la revendication 1 ou 2, **caractérisé en ce qu'**une ou plusieurs interfaces (14, 14.1, 14.2) sont affectées à la première unité centrale afin de connecter des périphériques, par exemple un lecteur externe de cartes, un ordinateur externe, un dispositif externe de communication ou similaire.

4. Appareil de commande selon l'une des revendications 1 à 3, **caractérisé en ce que** la première unité centrale est conformée pour exécuter des programmes utilisateurs indépendants du bus.

5. Appareil de commande selon l'une des revendications 1 à 4, **caractérisé en ce que** les unités centrales sont raccordées à un bloc d'alimentation (9) commun.

6. Appareil de commande selon l'une des revendications 1 à 5, **caractérisé en ce que** la deuxième unité centrale est conformée en module bus (10) déconnectable des autres composants de l'appareil de commande grâce à des contacts à fiche.

7. Appareil de commande selon les revendications 5 et 6, **caractérisé en ce que** le bloc d'alimentation est conformé en tant que module bloc d'alimentation (9) déconnectable des autres composants de l'appareil de commande grâce à des contacts à fiche.

8. Appareil de commande selon les revendications 5 et 6 ou 7, **caractérisé en ce que** la première unité centrale, le module bus (10) et le module bloc d'alimentation (9) présentent chacun des plaques de circuits imprimés distincts et que ces modules sont disposés dans un logement (5) de l'appareil de commande (1), chacun dans un compartiment (F₁ - F₄), lesquels compartiments (F₁ - F₄) sont séparés les uns des autres par des parois (8, 8.1, 8.2).

9. Procédé de fonctionnement d'un appareil de commande (1) d'un système d'installation de bâtiment (2), dont les acteurs (A₁ , A₂) sont excitables par un bus (3), comprenant une interface (16) destinée à connecter l'appareil de commande (1) à un tel bus (3) et un moniteur (13) destiné à représenter le système d'installation de bâtiment (2), des parties de ce dernier et/ou des états des acteurs (A₁ , A₂) raccordés au bus et/ou des capteurs (S), **caractérisé en ce qu'**au moins une première unité centrale, dépendante de l'utilisation, et au moins une deuxième unité centrale, seule responsable des tâches de commande et/ou de régulation du bus (3) et/ou des installations qui y sont connectées, sont exploitées dans l'appareil de commande (1), la première unité centrale étant commandée par la deuxième unité centrale afin d'afficher sur le moniteur (13) le système d'installation de bâtiment (2), des parties de ce dernier et/ou des états des acteurs (A₁ , A₂) raccordés au bus (3) et/ou des capteurs (S).

10. Procédé selon la revendication 9, **caractérisé en ce que** la première unité centrale peut être mise en mode veille ou mode sommeil lorsque aucune nécessité d'utilisation est constatée.

11. Procédé selon la revendication 10, **caractérisé en ce que** l'excitation de la première unité centrale par la seconde unité centrale comprend un réveil et un démarrage de celle-là, depuis un mode veille ou sommeil.

12. Procédé selon l'une des revendications 9 à 11, **caractérisé en ce que** les deux unités centrales se contrôlent mutuellement en ce qui concerne leur bon fonctionnement ou certaines parties de celui-ci.
